# DEMANDE DE BREVET EUROPEEN

(11) **EP 1 064 840 A1**
(43) Date de publication de la demande: **03.01.2001**
(21) Numéro de dépôt: 00401811.5
(22) Date de dépôt: 26.06.2000
(51) Int. Cl.: A01F 29/14, F16H 3/14, F16H 3/72

(54) **Dispositif d'entraînement destiné à équiper une machine de distribution de fourrages ou autres en vue d'un entraînement sélectif de son rouleau démêleur, et machine de distribution comportant un tel dispositif**

(30) Priorité: 02.07.1999 FR 9908551
(71) Demandeur: GYRAX, 86170 Champigny le Sec (FR)
(72) Inventeur: Besson, Claude, 86110 Mirebeau (FR)
(74) Mandataire: Jaunez, Xavier

(57) **Abrégé**

La présente invention concerne un dispositif d'entraînement (100) destiné à équiper une machine de distribution de fourrages ou autres du type comportant un tapis de convoyage, un rouleau démêleur et une turbine de distribution.

Conformément à l'invention, le dispositif d'entraînement (100) comporte un étage inverseur (120) relié à un étage de transmission (130) à train planétaire dont l'arbre de sortie (138) sert à entraîner le rouleau démêleur et dont la couronne (136) est couplée à un disque rotatif (115), ainsi qu'un mécanisme de freinage (110) servant à freiner et arrêter ledit disque rotatif pour provoquer la rotation du rouleau démêleur (7) dans un sens qui est déterminé par l'état de l'étage inverseur (120), à savoir un sens normal pour une action de démêlage et un sens opposé pour une action de débourrage en cas de bourrage devant la turbine de distribution.

## Description

La présente invention concerne un dispositif d'entraînement destiné à équiper une machine de distribution de fourrages ou autres.

Le type de machine de distribution concerné comporte habituellement un tapis de convoyage dont l'extrémité aval est surmontée d'un rouleau démêleur lui-même agencé transversalement en amont d'une turbine de distribution. Il en est par exemple ainsi des machines de distribution telles que les disileuses-pailleuses.

Le produit d'alimentation convoyé par le tapis de convoyage arrive ainsi sur le rouleau démêleur, dont la surface périphérique est munie de couteaux ou analogues afin d'exercer son action de démêlage, les produits arrivant ensuite au niveau d'une turbine de distribution placée directement en aval du rouleau démêleur, par référence au sens de déplacement des produits, laquelle turbine de distribution présente des pales radiales servant à projeter le fourrage ou autre vers le haut, en direction d'un volet de distribution latéral ou goulotte ménagé en partie haute ou basse du châssis de la machine.

Le problème auquel s'attache plus particulièrement l'invention est celui de l'entraînement du rouleau démêleur de la machine de distribution.

Dans les systèmes anciens, les différents éléments de la machine de distribution était le plus souvent mis en route en même temps, par une même source motrice, sauf en cas de système hydraulique. On pourra par exemple se référer au document FR-A-2 636 204. Ce système d'entraînement présente l'inconvénient d'un entraînement en tout ou rien, avec un démarrage du rouleau démêleur qui doit passer directement à sa vitesse de service, par exemple de l'ordre de 300 tours par minute. De plus, il y a toujours une certaine accumulation de fourrage contre la surface de la turbine de distribution après l'arrêt de la rotation de celle-ci, de sorte qu'un redémarrage de la machine, avec un entraînement immédiat du rouleau démêleur risque d'induire des phénomènes de bourrage qui peuvent entraîner une usure prématurée de certains composants de la machine.

On pourrait naturellement prévoir, pour chaque organe du dispositif, des moyens d'entraînement particuliers qui permettent de mettre en route cet organe du dispositif au moment opportun. Toutefois, les solutions qui ont été proposées sont onéreuses et encombrantes, si bien qu'elles ne rencontrent que très peu de succès.

Plus récemment, il a été proposé un dispositif d'entraînement sélectif permettant d'entraîner en douceur le rouleau démêleur d'une machine de distribution, grâce à un système d'embrayage associé à un train planétaire à pignons coniques. On pourra se référer au document FR-A-2 678 695 qui décrit un tel dispositif d'entraînement sélectif.

Dans ce dispositif d'entraînement sélectif, un disque rotatif est solidaire d'un tube creux entourant l'arbre d'entrée du dispositif d'entraînement, ledit tube creux étant solidaire de la couronne du train planétaire. Lorsque la rotation du disque rotatif n'est pas contrariée, l'arbre de sortie du dispositif d'entraînement reste immobile. Le freinage progressif, jusqu'à l'arrêt du disque rotatif, permet un entraînement progressif en rotation du rouleau démêleur autour de son axe, depuis la vitesse nulle jusqu'à la vitesse de service. Un tel système d'embrayage constitue naturellement un progrès notable par rapport aux systèmes précédents. Toutefois, ce système d'entraînement sélectif ne permet pas vraiment de s'affranchir des phénomènes de bourrage. Or ces phénomènes, bien qu'accidentels, se retrouvent fréquemment dans la mesure où les produits utilisés sont de types très différents et présentent une humidité propre qui varie d'un produit à l'autre, notamment en raison des différences de longueur des brins de fourrage ou autres. Ainsi, dans le cas d'un bourrage, il est nécessaire d'arrêter le déplacement des composants mobiles (tapis de convoyage, rouleau démêleur, turbine de distribution), afin d'effectuer le débourrage à la main, pour ensuite faire redémarrer la machine. Un autre inconvénient du dispositif connu précité réside dans son encombrement important, cet inconvénient étant naturellement encore plus sensible dans le cadre d'engin porté.

Par ailleurs, le document US-A-2 150 215 (EVERETT) décrit une transmission munie d'un inverseur qui, en cas de bourrage, permet d'inverser le sens du mécanisme d'alimentation. L'inverseur n'agit pas sur l'outil de coupe lui-même, celui-ci continuant à être entraîné dans le même sens. Outre que ceci ne permet pas forcément le dégagement de l'outil, la manoeuvre peut s'avérer dangereuse, l'outil forçant et risquant soit de rompre, soit de se dégager brusquement et de se remettre à tourner alors qu'on intervient à sa proximité.

L'arrière-plan technologique est enfin illustré par les documents GB-A-177 981, US-A-4 995 862 et DE-A-1 582 547.

L'invention vise à résoudre ce problème, en concevant un dispositif d'entraînement sélectif ne présentant pas les inconvénients ou limitations précités, et permettant en particulier de s'affranchir des phénomènes de bourrage avec une possibilité d'intervention rapide quel que soit le type de fourrage ou autre produit utilisé.

Ce problème est résolu conformément à l'invention grâce à un dispositif d'entraînement comportant un étage inverseur relié à un étage de transmission à train planétaire dont l'arbre de sortie sert à entraîner le rouleau démêleur et dont la couronne est couplée à un disque rotatif, ainsi qu'un mécanisme de freinage servant à freiner et arrêter ledit disque rotatif pour provoquer la rotation du rouleau démêleur dans un sens qui est déterminé par l'état de l'étage inverseur, à savoir un sens normal pour une action de démêlage et un sens opposé pour une action de débourrage en cas de bourrage devant la turbine de distribution.

De préférence, l'étage inverseur est agencé en amont de l'étage de transmission à train planétaire, ces deux étages étant disposés dans un boîtier commun. On parvient alors à réaliser un dispositif particulièrement compact, dont tous les éléments mobiles, à l'exception du disque rotatif, sont bien protégés à l'intérieur du boîtier. Avantageusement alors, l'arbre d'entrée de l'étage inverseur, qui est couplé à l'arbre d'entraînement de la turbine de distribution, est orthogonal à l'arbre de sortie de l'étage de transmission conformément à une disposition à renvoi d'angle, lequel arbre de sortie est couplé à l'arbre du rouleau démêleur. Cette disposition à renvoi d'angle permet d'avoir une structure particulièrement simple, avec un poids minimal.

Avantageusement, la couronne du train planétaire et le disque rotatif associé entourent coaxialement l'arbre de sortie de l'étage de transmission.

On pourra prévoir que l'arbre d'entrée de l'étage inverseur porte un crabot baladeur qui lui est couplé en rotation et qui engrène avec l'un ou l'autre de deux pignons coniques montés libres en rotation sur ledit arbre, ledit crabot étant manoeuvré par un levier d'actionnement extérieur au boîtier du dispositif, lesdits pignons coniques engrènant par ailleurs avec un troisième pignon conique calé sur l'arbre de sortie de l'étage inverseur. Il va de soi que l'on pourra prévoir un agencement différent de l'étage inverseur, en utilisant notamment un système à clavette, à pion, ou à excentrique.

Avantageusement, l'arbre de sortie de l'étage inverseur constitue l'arbre d'entrée de l'étage de transmission dont le train planétaire comporte quatre pignons coniques, dont deux pignons calés respectivement sur les arbres d'entrée et de sortie coaxiaux dudit train planétaire, et deux pignons montés libres en rotation sur un arbre transversal solidaire de la couronne dudit train planétaire.

Il est par ailleurs avantageux de prévoir que le mécanisme de freinage soit fixé sur le boîtier du dispositif par l'intermédiaire de cornières enjambant le disque rotatif. En particulier le mécanisme de freinage comporte deux mâchoires de frein agencées de part et d'autre du disque rotatif, lesdites mâchoires étant actionnées hydrauliquement par un circuit associé. On pourra en outre prévoir que le circuit hydraulique associé au mécanisme de freinage est relié au circuit hydraulique associé au tapis de convoyage par une vanne séquentielle faisant en sorte que le tapis de convoyage ne peut être mis en mouvement qu'après la mise en rotation du rouleau démêleur. Ceci constitue une sécurité encore jamais rencontrée et qui est très intéressante dans la pratique.

Avantageusement encore, le mécanisme de freinage exerce une pression déterminée sur le disque rotatif pour arrêter ledit disque et provoquer la rotation du rouleau démêleur, et autorise un glissement en cas d'effort dépassant la force de freinage ainsi exercée, de façon à constituer un limiteur de couple en cas de blocage dudit rouleau démêleur.

L'invention concerne également une machine de distribution de fourrages ou autres, telle que désileuse-pailleuse, du type comportant un tapis de convoyage dont l'extrémité aval est surmontée d'un rouleau démêleur lui-même agencé transversalement en amont d'une turbine de distribution, ainsi qu'un dispositif d'entraînement sélectif du rouleau démêleur intercalé fonctionnellement entre un arbre d'entraînement de la turbine de distribution et ledit rouleau démêleur, ledit dispositif d'entraînement présentant l'une au moins des caractéristiques précitées.

L'invention apparaîtra plus clairement à la lumière de la description qui va suivre et des dessins annexés, concernant un mode de réalisation particulier, en référence aux figures où :
- la figure 1 est une vue latérale (après enlèvement d'une paroi latérale) d'une machine de distribution de fourrages ou autres équipée conformément à l'invention d'un dispositif d'entraînement particulier pour l'entraînement en rotation de son rouleau démêleur ;
- la figure 2 est une vue de dessus de la machine précitée ;
- la figure 3 est une vue frontale de cette machine, sur laquelle on a représenté un système de volet de distribution latéral ou goulotte monté ici en partie haute du châssis de la machine ;
- la figure 4 est une vue en élévation du dispositif d'entraînement équipant la machine précitée ;
- la figure 5 est une vue de dessus du même dispositif d'entraînement ;
- la figure 6 est une vue latérale, faisant face au disque rotatif et à l'arbre de sortie, du dispositif d'entraînement précité ;
- la figure 7 est une coupe selon VII-VII de la figure 4, permettant de mieux distinguer la structure et les composants du dispositif d'entraînement à deux étages conforme à l'invention ;
- la figure 8 est une coupe partielle selon VIII-VIII de la figure 5, permettant de mieux distinguer l'agencement de l'étage inverseur constituant l'étage amont du dispositif d'entraînement.

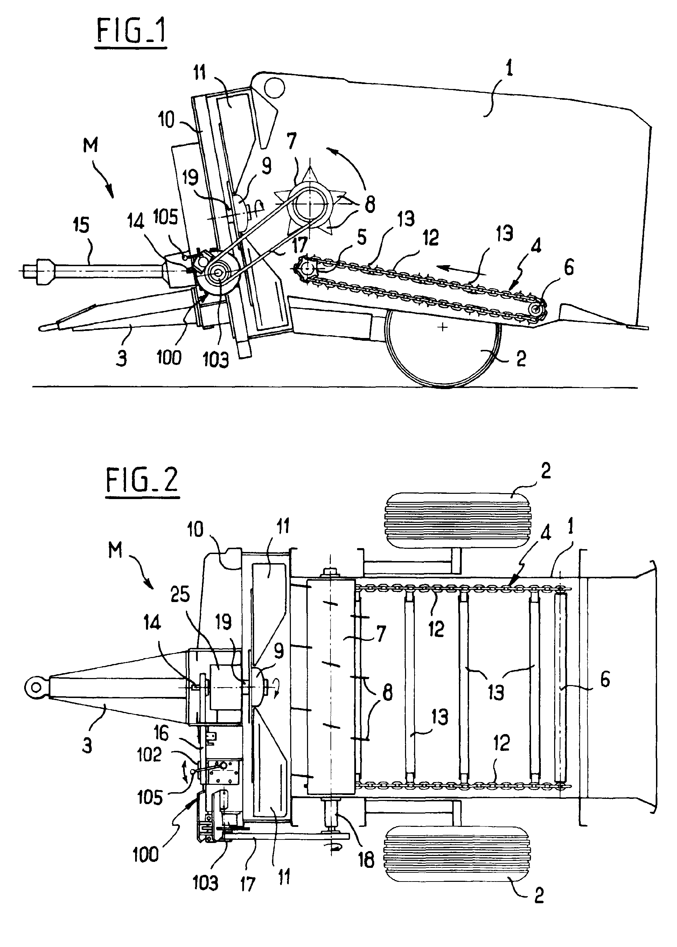

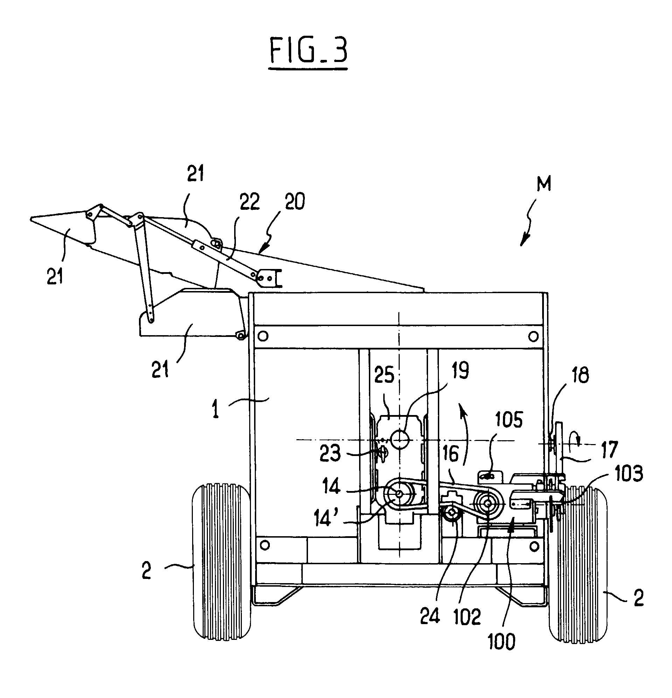

Les figures 1 à 3 illustrent une machine M de distribution de fourrages ou autres, ici du type désileuse-pailleuse. Le produit à distribuer peut être de types différents, incluant notamment des fibres végétales, des roseaux, des herbes, etc... : pour plus de simplicité, on ne parlera par la suite que de "fourrages". Cette machine comporte un châssis 1 formant conteneur de réception, ici équipé d'une paire de roues 2 et d'un timon d'accrochage 3. Au niveau du fond du châssis 1, est agencé un tapis de convoyage 4, ici constitué d'une paire de chaînes 12 passant autour de rouleaux d'extrémité 5,6 dont l'un (par exemple le rouleau 5) est motorisé. Les chaînes 12 sont reliées entre elles par des barrettes transversales 13 qui permettent d'assurer le convoyage des produits lorsque le tapis de convoyage est entraîné, avec un convoyage de l'arrière vers l'avant du carter de la machine. Les produits convoyés arrivent alors au niveau d'un rouleau démêleur 7, dont la surface périphérique est équipée de dents, griffes ou analogues 8. L'extrémité aval du tapis de convoyage 4 est ainsi surmontée du rouleau démêleur 7 disposé transversalement (c'est-à-dire que l'arbre 18 dudit rouleau s'étend dans une direction qui est perpendiculaire au plan longitudinal médian de la machine). Le rouleau démêleur 7 est lui-même agencé en amont d'une turbine de distribution 9, dont l'axe est ici légèrement incliné vers le haut. De façon classique, la turbine de distribution 9 est disposée contre le fond 10 du carter 1, et présente des pales radiales 11 qui permettent de projeter, par exemple vers le haut, le fourrage, en direction d'un système de volet de distribution latéral 20, ou goulotte, représenté seulement sur la figure 3. La structure particulière de ce volet de distribution latéral ne fait pas partie de l'invention, et on a illustré ici un mode de réalisation classique à trois éléments articulés 21, avec un actionnement au moyen d'un vérin 22. La position illustrée en figure 3 est une position de service, et ce système de volet peut naturellement être replié pour venir contre la face avant du châssis de la machine pour la position de transport sur route.

Sur la figure 1, on distingue un ensemble 15 de transmission à cardan qui peut être couplé à la prise de force d'un tracteur, et qui permet ainsi d'entraîner en rotation, par un boîtier de transmission 25, un arbre 14 qui est couplé à l'arbre 19 de la turbine de distribution 9. On notera sur la figure 3 la présence d'une poignée de manoeuvre 23 sur le boîtier de transmission 25, qui peut ici occuper trois positions, à savoir une position de vitesse lente, par exemple 270 tours par minute, pour le désilage, une position neutre qui peut servir si on utilise une pompe hydraulique comme source d'énergie pendant le désilage, et une position de vitesse rapide, par exemple 540 tours par minute, pour le paillage.

Un dispositif d'entraînement 100 est intercalé fonctionnellement entre l'arbre 14 d'entraînement de la turbine de distribution 9 et le rouleau démêleur 7, afin d'assurer un entraînement sélectif dudit rouleau démêleur. L'arbre d'entraînement 14 porte un pignon 14' sur lequel passe une chaîne de transmission 16, dont la tension est réglée par un tendeur associé 24, l'autre extrémité de la chaîne passant sur un pignon 102 qui est le pignon d'entrée du dispositif d'entraînement 100. Le pignon de sortie 103 du dispositif d'entraînement 100 permet d'entraîner l'arbre 18 du rouleau démêleur 7, par l'intermédiaire d'une chaîne 17. Il va de soi que les chaînes 16 et 17 pourront selon le cas être remplacées par des courroies adaptées capables d'engrèner avec les pignons d'entraînement associés.

Les figures 1 à 3 permettent aussi de distinguer un levier d'actionnement 105, associé au dispositif d'entraînement 100. Ainsi que cela sera expliqué plus en détail en référence aux figures suivantes, ce levier d'actionnement 105 fait partie d'un mécanisme inverseur intégré au dispositif d'entraînement, qui permet ainsi de changer le sens de rotation du rouleau démêleur 7, en particulier dans le cadre d'une action de débourrage de la machine. Le levier 105 peut alors occuper deux positions, dont l'une correspond au sens normal de rotation du rouleau démêleur afin que celui-ci exerce son action de démêlage, et l'autre à un sens opposé de rotation du rouleau démêleur pour une action de débourrage en cas de bourrage devant la turbine de distribution 9. On notera que le levier d'actionnement 105 est disposé en avant du châssis de la machine, de façon à être immédiatement accessible pour l'opérateur qui surveille la manoeuvre de la machine.

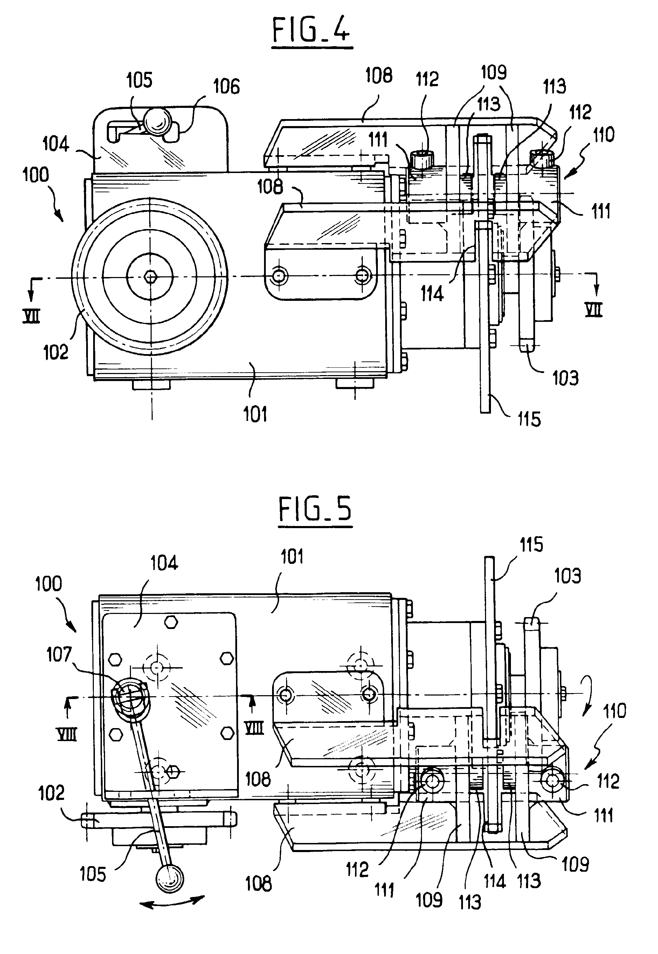

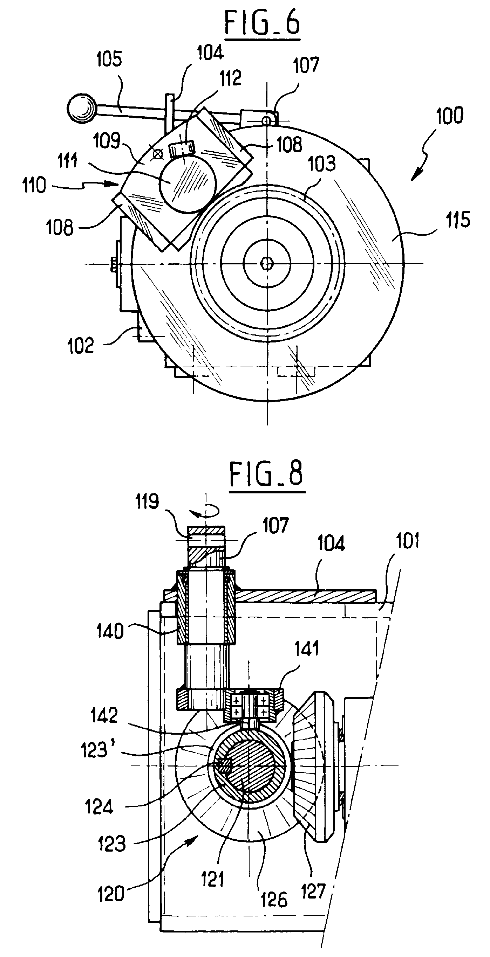

On va maintenant décrire plus en détail, en référence aux figures 4 à 8, la structure du dispositif d'entraînement 100 précité, qui sert à entraîner en rotation le rouleau démêleur 7 de la machine de distribution de fourrages M.

Sur les figures 4 à 6, on distingue ainsi un boîtier 101 duquel saillent le pignon 102 correspondant à l'entrée du dispositif d'entraînement 100, et, dans une direction orthogonale, le pignon 103, qui correspond à la sortie dudit dispositif. Le boîtier 101 est surmonté d'une platine en forme d'équerre 104, dont la partie relevée présente une fenêtre 106 par laquelle passe le levier d'actionnement 105, afin de bloquer ledit levier dans l'une ou l'autre de ses deux positions remarquables. Le levier 105 est couplé en rotation à un arbre 107, afin d'actionner le mécanisme inverseur qui sera décrit plus loin.

Toujours à l'extérieur du boîtier 101, on distingue sur les figures 4 à 6 deux cornières 108 boulonnées sur le boîtier 101, et qui s'étendent parallèlement à l'axe du pignon de sortie 103. Entre ces deux cornières 108 on distingue des entretoises 109 qui permettent la fixation d'un mécanisme de freinage 110. Ce mécanisme de freinage 110 sert à freiner et arrêter un disque de rotatif 115 qui tourne coaxialement au pignon de sortie 103, ledit disque étant, comme on le verra ensuite, solidaire de la couronne du train planétaire constituant l'étage de transmission du dispositif d'entraînement 100. Les cornières 108 présentent en outre une fente 114, permettant d'enjamber le disque rotatif 115, ceci pour assurer une fonction de protection de ce disque rotatif. Le mécanisme de freinage 110 est ici constitué par un système de deux mâchoires d'un type couramment utilisé, avec, de chaque côté du disque rotatif 115, un boîtier fixe 111 présentant un embout d'alimentation hydraulique 112, et une mâchoire mobile 113 qui peut ainsi être rentrée ou sortie du boîtier, afin d'exercer une action de freinage sur le disque rotatif 115, à la façon d'un frein à disque. Sur les figures 4 à 6 on n'a pas représenté les conduites d'alimentation associées aux embouts 112, qui permettent d'amener le fluide hydraulique pour l'actionnement du mécanisme de freinage 110.

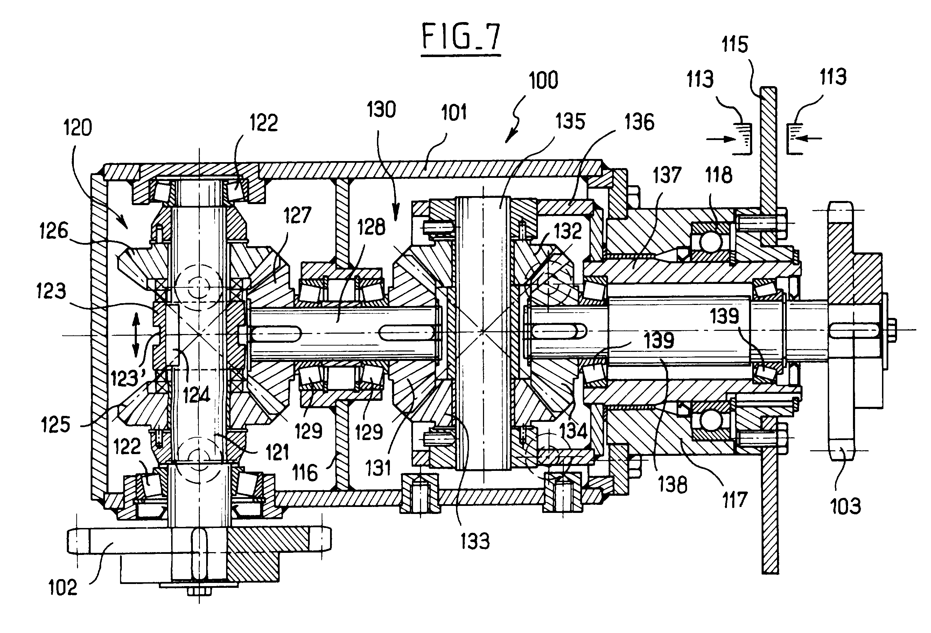

On va maintenant décrire plus en détail les composants constituant le dispositif d'entraînement 100, en référence aux figures 7 et 8.

Conformément à une caractéristique essentielle de l'invention, le dispositif d'entraînement 100 comporte un étage inverseur 120 relié à un étage de transmission 130 à train planétaire dont l'arbre de sortie 138 sert à entraîner le rouleau démêleur 7 et dont la couronne 136 est couplée au disque rotatif 115.

L'étage inverseur 120 est ici agencé en amont de l'étage de transmission 130 à train planétaire, ces deux étages étant disposés dans le boîtier 101 qui leur est commun. L'arbre d'entrée 121 de l'étage inverseur 120 est couplé, par le pignon 102 et la chaîne de transmission associée 16, à l'arbre 14 d'entraînement de la turbine de distribution 9. On notera que cet arbre d'entrée 121 est orthogonal à l'arbre de sortie 138 de l'étage de transmission 130, conformément à une disposition à renvoi d'angle, lequel arbre de sortie 138 est donc couplé à l'arbre 18 du rouleau démêleur 7 via la chaîne de transmission 17.

L'étage inverseur 120 comporte en l'espèce un arbre d'entrée 121 qui est tenu par des roulements 122 dans une chambre amont du boîtier 101, et cet arbre 121 porte un crabot baladeur 123 qui lui est solidaire en rotation par une clavette 124. Le crabot baladeur 123 présente des extrémités axiales à crabots ou dents en vue d'un accouplement avec l'un ou l'autre de deux pignons coniques 125,126 qui tournent librement sur l'arbre 121. Le crabot baladeur 123 présente une gorge circulaire médiane 123' dans laquelle est reçu un doigt 142 qui peut être manoeuvré par le levier d'actionnement précité 105. Ainsi que cela est mieux visible sur la figure 8, l'arbre 107, duquel est solidaire le levier d'actionnement 105 par le biais d'un tourillon passant dans un alésage transversal 119, pénètre dans le boîtier 101 par une douille 140, et se prolonge à l'intérieur dudit boîtier en présentant une partie excentrique 141 qui porte le doigt 142, dont l'extrémité libre vient dans la gorge 123' du crabot baladeur 123. Ainsi que cela est aisé à comprendre, l'actionnement du levier de manoeuvre 105 permet ainsi de déplacer axialement le crabot 123 sur l'arbre 121, pour l'amener en prise soit avec le pignon 125, soit avec le pignon 126. Ces deux pignons 125,126 engrènent par ailleurs avec un troisième pignon 127 qui est calé sur l'arbre de sortie 128 de l'étage inverseur 120. Ainsi, selon la position du levier d'actionnement 105 de l'étage inverseur 120, l'arbre d'entrée 121 permet d'entraîner soit le pignon 125, soit le pignon 126, en faisant ainsi tourner dans un sens ou dans l'autre l'arbre de sortie 128. Il va de soi que l'on pourra réaliser différemment l'étage inverseur 120, par exemple en utilisant un système connu à clavette, à pion, ou à excentrique.

En l'espèce, l'arbre de sortie 128, qui passe dans des roulements 129 associé à la cloison intermédiaire 116 du boîtier 101, constitue l'arbre d'entrée de l'étage de transmission 130.

L'étage de transmission 130 comporte un train planétaire à pignons coniques, avec quatre pignons coniques 131,132,133,134, dont deux pignons 131 et 134 sont calés respectivement sur les arbres d'entrée 128 et de sortie 138 qui sont coaxiaux, et deux autres pignons 132,133 qui sont quant à eux montés libres en rotation sur un arbre 135 transversal solidaire de la couronne 136 du train planétaire. La couronne 136 du train planétaire se raccorde à une douille d'extrémité 137 qui est coaxiale à l'arbre de sortie 138, avec une liaison par un roulement 139, ladite douille 137 tournant dans une extrémité 117 du boîtier 101 par le biais d'un roulement 118.

Lorsque le pignon d'entrée 102 est mis en rotation, l'arbre 128 est entraîné, dans un sens qui est déterminé par l'état de l'étage inverseur 120, ce qui entraîne en rotation les pignons coniques 132,133 du train planétaire de l'étage de transmission 130. Si le disque rotatif 115 est libre de tourner, la résistance exercée par la masse du rouleau démêleur sur le pignon de sortie 103 suffit à provoquer l'entraînement en rotation de la couronne 136, et par suite du disque rotatif 115. Un freinage progressif par les mâchoires 113 jusqu'à un arrêt du disque rotatif 115 permet alors une mise en rotation progressive de l'arbre de sortie 138 et du pignon 103 calé sur celui-ci, et permet par suite un démarrage en douceur de la rotation du rouleau démêleur 7. Le mécanisme de freinage 110 sert ainsi à freiner et arrêter le disque rotatif 115 pour provoquer la rotation du rouleau démêleur 7 dans un sens qui est déterminé par l'état de l'étage inverseur 120, à savoir un sens normal pour une action de démêlage et un sens opposé pour une action de débourrage en cas de bourrage devant la turbine de distribution 9.

Ainsi, en cas de bourrage, il suffit à l'opérateur de manoeuvrer le levier d'actionnement 105 pour actionner l'étage inverseur du dispositif d'entraînement 100, ce qui inverse le sens de rotation du pignon de sortie 103.

On notera que la disposition de l'étage inverseur 120 et de l'étage de transmission 130 à train planétaire dans un boîtier commun, avec un agencement à renvoi d'angle, permet une réalisation particulièrement compacte et de poids minimal. Ceci est également dû au fait que la douille 137 de la couronne 136 du train planétaire et le disque rotatif 115 associé entourent coaxialement l'arbre de sortie 138 de l'étage de transmission 130. Il est intéressant de noter que dans les systèmes de l'art antérieur, en particulier celui du document FR-A-2 678 695, le disque rotatif entoure coaxialement l'arbre d'entrée du dispositif d'entraînement. Tout ceci concourt à une compacité optimale du dispositif.

Ainsi que cela a été dit plus haut, le mécanisme de freinage 110 comporte deux mâchoires de frein 113 agencées de part et d'autre du disque rotatif 115, lesdites mâchoires étant actionnées hydrauliquement par un circuit associé. Le circuit hydraulique associé, non représenté ici, sera de préférence relié au circuit hydraulique associé au tapis de convoyage 4 par une vanne séquentielle (non représentée), afin que le tapis de convoyage 4 puisse être mis en mouvement seulement après la mise en rotation du rouleau démêleur 7. Grâce à cette vanne séqentielle, on est assuré d'être capable d'entraîner successivement d'abord la turbine de distribution, puis le rouleau démêleur, et enfin le tapis de convoyage. Ceci permet d'éviter avec une grande sécurité les phénomènes de bourrage souvent rencontrés au moment du redémarrage de la machine, ce qui constitue un avantage très important par rapport aux machines de distribution antérieures.

On pourra en outre faire en sorte que le mécanisme de freinage 110 exerce une pression déterminée sur le disque rotatif 115 pour arrêter ledit disque et provoquer ainsi la rotation du rouleau démêleur 7, en autorisant un glissement en cas d'effort dépassant la force de freinage ainsi exercée. On obtient alors un système avantageux de limiteur de couple en cas de blocage du rouleau démêleur 7.

L'invention vise à protéger non seulement le dispositif d'entraînement qui vient d'être décrit, mais également une machine de distribution de fourrages ou autres, telle qu'une désileuse-pailleuse, comportant un tapis de convoyage 4 dont l'extrémité aval est surmontée d'un rouleau démêleur 7 lui-même agencé transversalement en amont d'une turbine de distribution 9, ainsi qu'un dispositif 100 d'entraînement sélectif du rouleau démêleur 7 intercalé fonctionnellement entre un arbre 14 d'entraînement de la turbine de distribution 9 et ledit rouleau démêleur 7, ledit dispositif d'entraînement 100 présentant l'une au moins des caractéristiques précitées.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Dispositif d'entraînement (100) destiné à équiper une machine (M) de distribution de fourrages ou autres du type comportant un tapis de convoyage (4) dont l'extrémité aval est surmontée d'un rouleau démêleur (7) lui-même agencé transversalement en amont d'une turbine de distribution (9), ledit dispositif d'entraînement étant intercalé fonctionnellement entre un arbre (14) d'entraînement de la turbine de distribution (9) et le rouleau démêleur (7) afin d'assurer un entraînement sélectif dudit rouleau démêleur, et étant caractérisé en ce qu'il comporte un étage inverseur (120) relié à un étage de transmission (130) à train planétaire dont l'arbre de sortie (138) sert à entraîner le rouleau démêleur (7) et dont la couronne (136) est couplée à un disque rotatif (115), ainsi qu'un mécanisme de freinage (110) servant à freiner et arrêter ledit disque rotatif pour provoquer la rotation du rouleau démêleur (7) dans un sens qui est déterminé par l'état de l'étage inverseur (120), à savoir un sens normal pour une action de démêlage et un sens opposé pour une action de débourrage en cas de bourrage devant la turbine de distribution (9).

2. Dispositif d'entraînement selon la revendication 1, caractérisé en ce que l'étage inverseur (120) est agencé en amont de l'étage de transmission (130) à train planétaire, ces deux étages (120,130) étant disposés dans un boîtier commun (101).

3. Dispositif d'entraînement selon la revendication 2, caractérisé en ce que l'arbre d'entrée (121) de l'étage inverseur (120), qui est couplé à l'arbre d'entraînement (14) de la turbine de distribution (9), est orthogonal à l'arbre de sortie (138) de l'étage de transmission conformément à une disposition à renvoi d'angle, lequel arbre de sortie (138) est couplé à l'arbre (18) du rouleau démêleur (7).

4. Dispositif d'entraînement selon la revendication 3, caractérisé en ce que la couronne (137) du train planétaire et le disque rotatif associé (115) entourent coaxialement l'arbre de sortie (138) de l'étage de transmission (130).

5. Dispositif d'entraînement selon la revendication 3 ou la revendication 4, caractérisé en ce que l'arbre d'entrée (121) de l'étage inverseur (120) porte un crabot baladeur (123) qui lui est couplé en rotation et qui engrène avec l'un ou l'autre de deux pignons coniques (125,126) montés libres en rotation sur ledit arbre, ledit crabot (123) étant manoeuvré par un levier d'actionnement (105) extérieur au boîtier (101) du dispositif, lesdits pignons coniques (125,126) engrènant par ailleurs avec un troisième pignon conique (127) calé sur l'arbre de sortie (128) de l'étage inverseur (120).

6. Dispositif d'entraînement selon la revendication 5, caractérisé en ce que l'arbre de sortie (128) de l'étage inverseur (120) constitue l'arbre d'entrée de l'étage de transmission (130) dont le train planétaire comporte quatre pignons coniques (131,132,133,134), dont deux pignons (131,134) calés respectivement sur les arbres d'entrée (128) et de sortie (138) coaxiaux dudit train planétaire, et deux pignons (132,133) montés libres en rotation sur un arbre (135) transversal solidaire de la couronne (136) dudit train planétaire.

7. Dispositif d'entraînement selon l'une des revendications 2 à 6, caractérisé en ce que le mécanisme de freinage (110) est fixé sur le boîtier (101) du dispositif par l'intermédiaire de cornières (108) enjambant le disque rotatif (115).

8. Dispositif d'entraînement selon la revendication 7, caractérisé en ce que le mécanisme de freinage (110) comporte deux mâchoires de frein (113) agencées de part et d'autre du disque rotatif (115), lesdites mâchoires étant actionnées hydrauliquement par un circuit associé.

9. Dispositif d'entraînement selon la revendication 8, caractérisé en ce que le circuit hydraulique associé au mécanisme de freinage (110) est relié au circuit hydraulique associé au tapis de convoyage (4) par une vanne séquentielle faisant en sorte que le tapis de convoyage (4) ne peut être mis en mouvement qu'après la mise en rotation du rouleau démêleur (7).

10. Dispositif d'entraînement selon la revendication 8 ou la revendication 9, caractérisé en ce que le mécanisme de freinage (110) exerce une pression déterminée sur le disque rotatif (115) pour arrêter ledit disque et provoquer la rotation du rouleau démêleur (7), et autorise un glissement en cas d'effort dépassant la force de freinage ainsi exercée, de façon à constituer un limiteur de couple en cas de blocage dudit rouleau démêleur.

11. Machine (M) de distribution de fourrages ou autres, telle que désileuse-pailleuse, du type comportant un tapis de convoyage (4) dont l'extrémité aval est surmontée d'un rouleau démêleur (7) lui-même agencé transversalement en amont d'une turbine de distribution (9), ainsi qu'un dispositif (100) d'entraînement sélectif du rouleau démêleur (7) intercalé fonctionnellement entre un arbre (14) d'entraînement de la turbine de distribution (9) et ledit rouleau démêleur (7), caractérisée en ce que ledit dispositif d'entraînement (100) présente les caractéristiques de l'une au moins des revendications 1 à 10.
